# EUROPÄISCHE PATENTSCHRIFT

(11) **EP 0 870 844 B1**
(45) Veröffentlichungstag und Bekanntmachung des Hinweises auf die Patenterteilung: **17.01.2001**
(21) Anmeldenummer: 98104993.5
(22) Anmeldetag: 19.03.1998
(51) Int. Cl.: C22C 5/04, C22F 1/14, C03B 37/095

(54) **Dispersionsverfestigter Platin-Werkstoff, Verfahren zu seiner Herstellung und seine Verwendung**
Dispersion strengthened platinum alloy and a method for its production
Alliage de platine renforcé par dispersion d'oxydes et procedé de sa fabrication

(30) Priorität: 08.04.1997 DE 19714365
(43) Veröffentlichungstag der Anmeldung: 14.10.1998
(73) Patentinhaber: W.C. Heraeus GmbH & Co. KG, 63450 Hanau (DE)
(72) Erfinder: Fischer, Bernd, Prof. Dr. Ing. habil., 07749 Jena (DE); Goy, Karl-Heinz, 63571 Gelnhausen (DE); Kock, Wulf, Dr., 63755 Alzenau (DE); Lupton, David Francis, Dr., 63571 Gelnhausen (DE); Manhardt, Harald, 63486 Bruchköbel (DE); Merker, Jürgen, Dr., 63456 Hanau (DE); Schölz, Friedhold, 63517 Rodenbach (DE); Zurowski, Berthold, 63486 Bruchköbel (DE)
(74) Vertreter: Kühn, Hans-Christian

(56) Entgegenhaltungen:
- EP-A- 0 683 240
- DD-A- 132 673
- DE-A- 2 002 886
- GB-A- 1 244 253
- US-A- 4 274 852
- US-A- 4 374 668
- PATENT ABSTRACTS OF JAPAN vol. 095, no. 005, 30.Juni 1995 & JP 07 034162 A (NAGAHORI:KK), 3.Februar 1995,

## Beschreibung

Die Erfindung betrifft einen durch feinverteilte, kleine Teilchen aus Unedelmetalloxid dispersionsverfestigten Platin-Werkstoff, ein Verfahren zu seiner Herstellung und seine Verwendung.

Die Erfindung betrifft besonders einen Platin-Werkstoff aus dispersionsverfestigtem Platin oder dispersionsverfestigten Platin-Rhodium-, Platin-Iridium- und Platin-Gold-Legierungen in Form von Halbzeugen oder Fertigprodukten.

Es ist bekannt, daß Platinmetalle eine höhere Warmfestigkeit besitzen, wenn sie in gleichmäßiger Verteilung eine geringe Menge darin nicht löslicher, kleiner Teilchen enthalten. Die Teilchen bestehen üblicherweise aus Zirkoniumdioxid oder Yttriumoxid. Platinmetalle dieser Art werden als dispersionsverfestigt oder dispersionsgehärtet bezeichnet. Dispersionsverfestigte Platin-Werkstoffe zeichnen sich durch ihre Widerstandsfähigkeit gegen Korrosion und Oxidation bei hoher Temperatur aus und werden u. a. wegen ihrer Beständigkeit gegenüber Glasschmelzen in der Glasindustrie eingesetzt, wie zum Beispiel DE 44 40 704 C2 zeigt. Ihre Herstellung kann nach unterschiedlichen Verfahren erfolgen (E. Drost, H. Gölitzer, M. Poniatowski, S. Zeuner: Platin-Werkstoffe für Hochtemperatur-Einsatz, Metall 50 (1996), 492 - 498).

Eine weitere Möglichkeit, die Warmfestigkeit von Platin und Platinmetallen zu erhöhen, besteht in dem Zulegieren von Rhodium oder anderen geeigneten Metallen. So sind beispielsweise aus DE 1 533 267 C1 auf dem Schmelzweg hergestellte Platinmetall-Legierungen, die 0,005 - 0,2 %, vorzugsweise 0,01 - 0,1 %, eines oder mehrerer Seltenerdmetalle enthalten, bekannt. Die Platinmetall-Legierungen werden als Werkstoffe für die Herstellung von Spinndüsen, Katalysatornetzen, Geräten für die chemische Industrie und für ähnliche Anwendungsgebiete, bei denen bei hohen Temperaturen von 500 °C und mehr ein Kornwachstum der Legierungen vermieden werden muß, eingesetzt. Als Beispiele werden Platin-Rhodium mit 0,005 % Cer, Platin-Gold mit 0,02 % Lanthan, Palladium mit 0,01 % Yttrium und Palladium-Silber mit 0,005 % Gadolinium genannt.

DE 1 783 074 A1 betrifft durch innere Oxidation dispersionsgehärtete Werkstoffe auf der Basis von Platinmetallen oder Gold. Die Werkstoffe werden aus Legierungen dieser Metalle mit solchen Elementen, deren Oxide hohe Bildungswärmen aufweisen, durch eine zweistufige Wärmebehandlung - eine Auslagerungsbehandlung bei 300 - 800 °C und eine Oxidationsbehandlung bei 800 - 1400 °C - hergestellt. Die Legierungen können in Form von zum Beispiel Draht oder Blech oder - zur Verkürzung der Oxidationszeit - in Form von durch mechanische Zerkleinerung kompakter Legierungskörper gewonnenen Pulvern (Korngröße zwischen etwa 50 und 500 Mikrometer) eingesetzt werden. Geeignet sind zum Beispiel Platin-Zirkonium-, Platin-Rhodium-Zirkonium- und Platin-Palladium-Zirkonium-Legierungen. Es werden sehr feinkörnige Zirkoniumdioxid-Ausscheidungen erhalten; die Durchmesser der Oxid-Partikel liegen im Bereich von < 1 Mikrometer bis < 0,1 Mikrometer. Neben Zirkonium eignen sich auch andere Elemente, deren Oxide hohe Bildungswärmen aufweisen, z. B. Aluminium, Beryllium, Titan, Hafnium, Tantal und Thorium. Ihr Gehalt liegt zwischen 0,1 und 5 %.

Aus US 4 014 692 A und US 4 123 263 A ist ein auf dem Schmelzweg hergestellter und besonders für Glasfaserspinndüsen geeigneter kriechbeständiger Platin-Werkstoff aus 10 - 40 Gewichts-% Rhodium, 0,001 - 0,5 Gewichts-% Bor, 0,015 - 1,25 Gewichts-% Zirkonium, Rest Platin bekannt. Das Zirkonium kann dabei ganz oder teilweise durch Hafnium, Magnesium, Yttrium, Lanthan, Titan, Niob und Tantal ersetzt werden; bevorzugt wird jedoch der Zirkonium enthaltende Platin-Werkstoff.

GB 2 085 028 A betrifft eine kornstabilisierte ("grain stabilised") Legierung aus Platinmetall (Platin, Rhodium, Palladium, Ruthenium, Iridium), Gold und die Kornstabilisierung bewirkendem Mittel, die sich besonders für Geräte und Apparaturen in Kontakt mit Glasschmelzen und zum Aufschluß von Proben für die Röntgenfluoreszenzspektroskopie eignet. Das die Kornstabilisierung bewirkende Mittel ist ein Oxid, Carbid, Nitrid oder Silicid eines Elements mit einer im Vergleich zum Platinmetall und Gold höheren Reaktivität. Beispiele solcher Elemente sind Scandium, Yttrium, Thorium, Zirkonium, Hafnium, Titan, Aluminium und die Lanthaniden; bevorzugt werden Zirkonium und Thorium. Der Gehalt an Gold in der Legierung beträgt vorzugsweise 3 - 8 Gewichts-%, der an kornstabilisierendem Mittel nicht mehr als 0,5 Gewichts-%. Als besonders vorteilhaft wird die Herstellung der Legierung durch Versprühen der aus Platinmetall, Gold und reaktivem Element bestehenden Schmelze in einer beispielsweise die Oxidbildung ermöglichenden Atmosphäre beschrieben. In einer solchen Legierung liegt das kornstabilisierende Oxid in einer Menge vor, die einer 75 - 80 %igen Umsetzung des Elements zum Oxid entspricht. Die Menge an nichtumgesetztem Element sollte wegen der nachteiligen Wirkung auf das Kornwachstum nicht mehr als 0,025 Gewichts-% betragen.

In EP-A-0 683 240 wird Y₂O₃ zu einer Platinlegierungs pulver zugegeben. Die Bildung des Unedelmetalloxids wird nicht während einer Wärmebehandlung eine in Kompakter Form vorliegenden Platin-Unedelmetall-Legierung unternommen.

In DD 157 709 werden Platinmetall-Legierungen aus 0,01 - 0,5 % Yttrium, 0,001 - 0,5 % Bor, 0,001 - 0,5% Calcium, Rest ein oder mehrere Platinmetalle und gegebenenfalls Gold und Nickel beschrieben. Die Legierungen können auf dem Schmelzweg hergestellt und sowohl im nichtoxidierten als auch im inneroxidierten Zustand eingesetzt werden. Sie zeigen auch bei langer mechanischer, thermischer, chemischer und korrodierender Beanspruchung nahezu die ursprünglichen Korngrößen; Kriechbeständigkeit und Zeitstandfestigkeit sind sehr gut.

In Neue Hütte 35 (1990), 391 - 393, wird über Untersuchungen der Eigenschaften von Platin-Legierungen mit Yttrium und Bor und in Platinum Metals Rev. (1995), 39, 167 - 170, über Mikro- struktur und Eigenschaften von mit Yttrium und Zirkonium dispersionsgehärteten Platin-Legierungen berichtet.

Aus DE 195 31 242 C1 ist ein warmfester Platin-Werkstoff aus Platin und 0,1 - 0,35 Gewichts% Zirkonium und/oder Zirkoniumoxid und 0,002 - 0,02 Gewichts-% Bor und/oder Boroxid bekannt. Der Platin-Werkstoff wird vorzugsweise durch Schmelzen von Zirkonium und Bor enthaltenden Platin-Zirkonium-Bor-Legierungen, Vergießen zu Barren, Kaltwalzen zu Blechen und halbstündiges Glühen bei 1000 °C in Argon oder Luft hergestellt. Die oxidative Glühung, bei der thermisch stabile Oxide entstehen, führt zu einer Erhöhung der Zeitstandfestigkeit und zu einer Verringerung der Duktilität bei Raumtemperatur. Der auf schmelzmetallurgischem Wege hergestellte Platin-Werkstoff ist eine wirtschaftliche Alternative zu dem pulvermetallurgisch hergestellten Zirkoniumdioxid-verfestigten Platin-Werkstoff (FKS-Platin), der aber eine wesentlich höhere Zeitstandfestigkeit aufweist.

Der Erfindung liegt die Aufgabe zugrunde, einen durch feinverteilte, kleine Teilchen aus Unedelmetalloxid dispersionsverfestigten Platin-Werkstoff zu finden, der eine möglichst geringe Menge an nichtoxidiertem Unedelmetall enthält, eine hohe Zeitstandfestigkeit auch bei Temperaturen oberhalb von 1200° C besitzt und ein sehr gutes Umformverhalten aufweist. Der Platin-Werkstoff soll besonders ein Werkstoff aus dispersionsverfestigtem Platin oder dispersionsverfestigten Platin-Rhodium-, Platin-Iridium- und Platin-Gold-Legierungen sein. Außerdem soll ein Verfahren zur Herstellung des erfindungsgemäßen Platin-Werkstoffs, das das Erschmelzen und Vergießen einer Platin-Unedelmetall-Legierung einschließt, angegeben werden. Der Platin-Werkstoff soll unter anderem für den Einsatz in der Glasindustrie geeignet sein.

Der die Lösung der Aufgabe darstellende Platin-Werkstoff ist in Anspruch 1 angegeben. Ein Verfahren zur Herstellung des Werkstoffes wird in Anspruch 17 angegeben, und Verwendungen werden in den Ansprüchen 36 bis 39 angegeben.

Besonders bewährt hat sich der erfindungsgemäße Platin-Werkstoff, wenn mindestens 90 Gewichts-% des Unedelmetalls als Oxid vorliegen.

In den Ausführungsformen des Platin-Werkstoffs gemäß Anspruch 1 kann das Unedelmetall aus (a) Cer oder, wenn es aus einem Gemisch aus mindestens zwei der Elemente Yttrium, Zirkonium und Cer gebildet wird, aus den Kombinationen (b) Yttrium und Zirkonium, (c) Yttrium und Cer, (d) Zirkonium und Cer oder (e) Yttrium, Zirkonium und Cer bestehen.

Bewährt hat sich der erfindungsgemäße Platin-Werkstoff, wenn die Mengen an Unedelmetall für die Ausführungsformen
(a) 0,005 - 0,3 Gewichts-%, besonders 0,01 - 0,2 Gewichts-%,
(b) 0,005 - 1 Gewichts-%, besonders 0,05 - 0,5 Gewichts-%,
(c) 0,005 - 0,5 Gewichts-%, besonders 0,01 - 0,3 Gewichts-%,
(d) 0,005 - 0,5 Gewichts-%, besonders 0,01 - 0,3 Gewichts-% und
(e) 0,005 - 0,5 Gewichts-%, besonders 0,01 - 0,3 Gewichts-% betragen.

Die Gemische der Oxide bestehen bei den Ausführungsformen
(b) aus 2 - 70, vorzugsweise 5 - 20 Gewichts-% Yttriumoxid und 30 - 98, vorzugsweise 80 - 95 Gewichts-% Zirkoniumoxid,
(c) aus 2 - 70, vorzugsweise 5 - 20 Gewichts-% Yttriumoxid und 30 - 98, vorzugsweise 80 - 95 Gewichts-% Ceroxid,
(d) aus 30 - 98, vorzugsweise 80 - 95 Gewichts-% Zirkoniumoxid und 2 - 70, vorzugsweise 5 - 20 Gewichts-% Ceroxid und
(e) aus 2 - 70, vorzugsweise 2 - 20 Gewichts-% Yttriumoxid, 30 - 96, vorzugsweise 70 - 95 Gewichts-% Zirkoniumoxid und 2 - 70, vorzugsweise 2 - 50 Gewichts-% Ceroxid.

Die Lösung der Aufgabe besteht weiterhin in einem Verfahren zur Herstellung gemäß Anspruch 17 von durch feinverteilte, kleine Teilchen aus Unedelmetalloxid dispersionsverfestigtem Platin-Werkstoff unter Erschmelzen und Vergießen einer Platin-Unedelmetall-Legierung und Wärmebehandlung in einem oxidierenden Medium, das erfindungsgemäß dadurch gekennzeichnet ist, daß eine als Unedelmetall Cer oder ein Gemisch aus mindestens zwei der Elemente Yttrium, Zirkonium und Cer enthaltende Platin-Unedelmetall-Legierung erschmolzen und vergossen wird und die Wärmebehandlung in dem oxidierenden Medium bei 600 - 1400 °C und so lange erfolgt, bis mindestens 75 Gewichts-% des Unedelmetalls oxidiert sind.

Besonders bewährt hat sich das Verfahren, wenn die Wärmebehandlung so lange erfolgt, bis mindestens 90 Gewichts-% des Unedelmetalls oxidiert sind.

Das für das erfindungsgemäße Verfahren erforderliche oxidierende Medium bedeutet im Sinne der Erfindung ein Medium, das in dem Temperatur-Bereich von 600 - 1400 °C eine Oxidation des Unedelmetalls, nicht jedoch der Edelmetalle, bewirkt. Bevorzugt ist eine Atmosphäre aus Luft, Sauerstoff, Wasserdampf oder einem Gemisch aus Wasserdampf und Wasserstoff, Edelgas, besonders Helium oder Argon, oder Stickstoff.

Die für die Oxidation von mindestens 75 Gewichts-%, besonders von mindestens 90-Gewichts-%, des Unedelmetalls erforderliche Dauer der Wärmebehandlung ergbit sich aus Vorversuchen, in denen die im Verlauf der Wärmebehandlung von der Platin-Unedelmetall-Legierung aufgenommene Menge an Sauerstoff in Abhängigkeit von der Zeit bestimmt wird. Die Bestimmung des Sauerstoffs beruht auf der quantitativen IR-spektroskopischen Analyse von durch Reaktion schmelzflüssiger Proben des Platin-Werkstoffs mit Kohlenstoff (zu Kohlenmonoxid) und anschließende Oxidation gebildetem Kohlendioxid und wird in Beispiel 15 näher beschrieben.

Erfindungsgemäß werden Platin-Unedelmetall-Legierungen mit einem Unedelmetall-Gehalt von 0,005 - 1 Gewichts-% erschmolzen und vergossen. Die Legierungen enthalten als Edelmetall entweder nur Platin oder neben Platin noch 0,5 - 25 Gewichts-% Rhodium, 0,3 - 50 Gewichts-% Iridium oder 0,5 - 8 Gewichts-% Gold.

Als Unedelmetall haben sich Cer in einer Menge von 0,005 - 0,3 Gewichts-%, besonders 0,01 - 0,2 Gewichts-%, Yttrium und Zirkonium in einer Menge von 0,005 - 1 Gewichts-%, besonders 0,05 - 0,5 Gewichts-%, Yttrium und Cer in einer Menge von 0,005 - 0,5 Gewichts-%, besonders 0,01 - 0,3 Gewichts-%, Zirkonium und Cer in einer Menge von 0,005 - 0,5 Gewichts%, besonders 0,01 - 0,3 Gewichts-% und Yttrium, Zirkonium und Cer in einer Menge von 0,005 - 0,5 Gewichts-%, besonders 0,01 - 0,3 Gewichts-%, bewährt.

Der erfindungsgemäße Platin-Werkstoff zeichnet sich durch seine Beständigkeit und die Feinkörnigkeit seines Gefüges auch bei hohen Temperaturen aus.

Bei dem erfindungsgemäßen Verfahren zur Herstellung des Platin-Werkstoffs ist die Einfachheit und Wirtschaftlichkeit besonders hervorzuheben; denn überraschenderweise führt die erfindungsgemäße Unedelmetall-Auswahl zu einer relativ schnellen und weitgehenden Oxidation des Unedelmetalls während der Wärmebehandlung der in kompakter Form vorliegenden Platin-Unedelmetall-Legierung.

Weitere Vorteile sind das sehr gute Umformverhalten und die Schweißbarkeit sowohl der erschmolzenen und vergossenen Platin-Unedelmetall-Legierungen als auch des dispersionsverfestigten Platin-Werkstoffs. So kann das erfindungsgemäße Verfahren vor und nach der Wärmebehandlung Schritte des Kaltverformens, Warmverformens und Schweißens einschließen und der Platin-Werkstoff in Form von Halbzeugen oder Fertigprodukten erhalten werden.

Der erfindungsgemäße Platin-Werkstoff eignet sich für alle Anwendungsgebiete, die eine Beständigkeit bei hohen Temperaturen erfordern. Besonders bewährt hat sich seine Verwendung für in der Glasindustrie und im Laboratorium einzusetzende Geräte, zur Herstellung von Beschichtungen und als Schweißzusatzwerkstoff.

Zur näheren Erläuterung der Erfindung werden in den folgenden Beispielen Ausführungsformen des erfindungsgemäßen dispersionsverfestigten Platin-Werkstoffs und ihre Herstellung nach dem Verfahren gemäß der Erfindung (Beispiele 1 bis 10) und - zum Vergleich - die Anwendung des erfindungsgemäßen Verfahrens auf Platin-Legierungen, die die bekannten dispersionsverfestigenden Zusätze Yttrium (Beispiel 11), Zirkonium (Beispiel 12), Yttrium und Bor (Beispiel 13) und Zirkonium und Bor (Beispiel 14) enthalten, beschrieben. Das in den Beispielen eingesetzte Platin besitzt eine Reinheit von 99,95 %.

In Beispiel 15 wird die Bestimmung des Sauerstoff-Gehaltes der in den Beispielen 1 - 14 angegebenen Platin-Werkstoffe und von Platin und Platin/Rhodium 10 beschrieben.

Beispiel 16 betrifft die Bestimmung der Zeitstandfestigkeit des in den Beispielen 1 - 10 beschriebenen erfindungsgemäßen Platin-Werkstoffs und von zwei handelsüblichen dispersionsverfestigten Platin-Werkstoffen und von Platin/Rhodium 10 und Platin/Gold 5.

### Beispiel 1

Aus 4675 g Platin, 250 g einer Vorlegierung aus 97 Gewichts-% Platin und 3 Gewichts-% Zirkonium und 75 g einer Vorlegierung aus 99 Gewichts-% Platin und 1 Gewichts-% Yttrium wird in einem Vakuuminduktionsschmelzofen unter Verwendung eines Zirkoniumdioxid-Tiegels eine Platin-Legierung mit 0,15 Gewichts-% Zirkonium und 0,015 Gewichts-% Yttrium erschmolzen. Die Platin-Legierung wird unter Argon (300 mbar) zu Barren vergossen, aus denen durch Kaltwalzen Bleche mit einer Dicke von 2,4 Millimeter hergestellt werden. Die Bleche werden dann 200 Stunden lang einer Wärmebehandlung bei 1000 °C ausgesetzt.

### Beispiel 2

Aus 4730 g Platin, 200 g einer Vorlegierung aus 97 Gewichts-% Platin und 3 Gewichts-% Zirkonium und 70 g einer Vorlegierung aus 99 Gewichts-% Platin und 1 Gewichts-% Yttrium wird in einem Vakuuminduktionsschmelzofen unter Verwendung eines Zirkoniumdioxid-Tiegels eine Platin-Legierung mit 0,12 Gewichts-% Zirkonium und 0,014 Gewichts-% Yttrium erschmolzen. Die Platin-Legierung wird unter Argon (300 mbar) zu Barren vergossen, aus denen durch Kaltwalzen Bleche mit einer Dicke von 2,4 Millimeter hergestellt werden. Die Bleche werden dann 200 Stunden lang einer Wärmebehandlung bei 1000 °C ausgesetzt.

### Beispiel 3

Aus 4683 g Platin, 167 g einer Vorlegierung aus 97 Gewichts-% Platin und 3 Gewichts-% Zirkonium und 150 g einer Vorlegierung aus 99 Gewichts-% Platin und 1 Gewichts-% Yttrium wird in einem Vakuuminduktionsschmelzofen unter Verwendung eines Zirkoniumdioxid-Tiegels eine Platin-Legierung mit 0,1 Gewichts-% Zirkonium und 0,03 Gewichts-% Yttrium erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 200 Stunden lang einer Wärmebehandlung bei 1000 °C ausgesetzt.

### Beispiel 4

Aus 4825 g Platin und 175 g einer Vorlegierung aus 94 Gewichts-% Platin und 6 Gewichts-% Cer wird in einem Vakuuminduktionsschmelzofen unter Verwendung eines Zirkoniumdioxid-Tiegels eine Platin-Legierung mit 0,21 Gewichts-% Cer erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 200 Stunden lang einer Wärmebehandlung bei 1000 °C ausgesetzt.

### Beispiel 5

Aus 4396,6 g Platin, 416,7 g einer Vorlegierung aus 97 Gewichts-% Platin und 3 Gewichts-% Zirkonium, 170 g einer Vorlegierung aus 99 Gewichts-% Platin und 1 Gewichts-% Yttrium und 16,7 g einer Vorlegierung aus 94 Gewichts-% Platin und 6 Gewichts-% Cer wird in einem Vakuuminduktionsofen unter Verwendung eines Zirkoniumdioxid-Tiegels eine Platin-Legierung mit 0,25 Gewichts-% Zirkonium, 0,034 Gewichts-% Yttrium und 0,02 Gewichts-% Cer erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 200 Stunden lang einer Wärmebehandlung bei 1000 °C ausgesetzt.

### Beispiel 6

Aus 4645 g Platin, 230 g einer Vorlegierung aus 94 Gewichts-% Platin und 6 Gewichts-% Cer und 125 g einer Vorlegierung aus 99 Gewichts-% Platin und 1 Gewichts-% Yttrium wird in einem Vakuuminduktionsschmelzofen unter Verwendung eines Zirkoniumdioxid-Tiegels eine Platin-Legierung mit 0,275 Gewichts-% Cer und 0,025 Gewichts-% Yttrium erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 200 Stunden lang einer Wärmebehandlung bei 1000 °C ausgesetzt.

### Beispiel 7

Aus 4688,3 g einer Legierung aus 90 Gewichts-% Platin und 10 Gewichts-% Rhodium, 156,7 g einer Vorlegierung aus 87 Gewichts-% Platin, 10 Gewichts-% Rhodium und 3 Gewichts-% Zirkonium und 155 g einer Vorlegierung aus 89 Gewichts-% Platin, 10 Gewichts-% Rhodium und 1 Gewichts-% Yttrium wird in einem Vakuuminduktionsschmelzofen unter Verwendung eines Zirkoniumdioxid-Tiegels eine Platin-Rhodium-Legierung mit 0,094 Gewichts-% Zirkonium und 0,031 Gewichts-% Yttrium erschmolzen. Die Platin-Rhodium-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt.

### Beispiel 8

Aus 4743,3 g einer Legierung aus 95 Gewichts-% Platin und 5 Gewichts-% Gold, 56,7 g einer Vorlegierung aus 92 Gewichts-% Platin, 5 Gewichts-% Gold und 3 Gewichts-% Zirkonium und 200 g einer Vorlegierung aus 94 Gewichts-% Platin, 5 Gewichts-% Gold und 1 Gewichts-% Yttrium wird in einem Vakuuminduktionsschmelzofen unter Verwendung eines Zirkoniumdioxid-Tiegels eine Platin-Gold-Legierung mit 0,034 Gewichts-% Zirkonium und 0,04 Gewichts-% Yttrium erschmolzen. Die Platin-Gold-Legierung wird unter Argon (300 mbar) zu Barren vergossen, aus denen durch Kaltwalzen Bleche mit einer Dicke von 2,4 Millimeter hergestellt werden. Die Bleche werden dann 400 Stunden lang einer Wärmebehandlung bei 1000 °C an Luft ausgesetzt.

### Beispiel 9

Aus 4682,5 g einer Legierung aus 95 Gewichts-% Platin und 5 Gewichts-% Gold, 259 g einer Vorlegierung aus 92 Gewichts-% Platin, 5 Gewichts-% Gold und 3 Gewichts-% Zirkonium und 67,5 g einer Vorlegierung aus 94 Gewichts Platin, 5 Gewichts-% Gold und 1 Gewichts-% Yttrium wird in einem Vakuuminduktionsschmelzofen unter Verwendung eines Zirkoniumdioxid-Tiegels eine Platin-Gold-Legierung mit 0,15 Gewichts-% Zirkonium und 0,0135 Gewichts-% Yttrium erschmolzen. Die Platin-Gold-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt.

### Beispiel 10

Aus 4833,3 g einer Legierung aus 95 Gewichts-% Platin und 5 Gewichts-% Gold und 166,7 g einer Vorlegierung aus 89 Gewichts-% Platin, 5 Gewichts-% Gold und 6 Gewichts-% Cer wird in einem Vakuuminduktionsschmelzofen unter Verwendung eines Zirkoniumdioxid-Tiegels eine Platin-Gold-Legierung mit 0,2 Gewichts-% Cer erschmolzen. Die Platin-Gold-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt.

### Beispiel 11 (Vergleich)

Aus 4762 g Platin, 200 g einer Vorlegierung aus 97 Gewichts-% Platin und 3 Gewichts-% Zirkonium und 37,5 g einer Vorlegierung aus 99 Gewichts-% Platin und 1 Gewichts-% Bor wird in einem Vakuuminduktionsschmelzofen unter Verwendung eines Zirkoniumdioxid-Tiegels eine Platin-Legierung mit 0,12 Gewichts-% Zirkonium und 0,0075 Gewichts-% Bor erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt.

### Beispiel 12 (Vergleich)

Aus 4685 g Platin und 315 g einer Vorlegierung aus 99 Gewichts-% Platin und 1 Gewichts-% Yttrium wird in einem Vakuuminduktionsschmelzofen unter Verwendung eines Zirkoniumdioxid-Tiegels eine Platin-Legierung mit 0,063 Gewichts-% Yttrium erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt. Die wärmebehandelte Platin-Yttrium-Legierung besitzt ein feinkörniges Gefüge. Aber bereits nach vierstündigem Glühen bei 1200 °C zeigt sich ein starkes Kornwachstum.

### Beispiel 13 (Vergleich)

Aus 200 g Platin, 0,06 g Yttrium und 0,02 g Bor wird im Lichtbogen eine Platin-Legierung mit 0,03 Gewichts-% Yttrium und 0,01 Gewichts-% Bor erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt. Die wärmebehandelte Platin-Yttrium-Bor-Legierung besitzt ein feinkörniges Gefüge. Aber bereits nach vierstündigem Glühen bei 1200 °C zeigt sich ein starkes Kornwachstum.

### Beispiel 14 (Vergleich)

Aus 4877 g Platin und 123 g einer Vorlegierung aus 97 Gewichts-% Platin und 3 Gewichts-% Zirkonium wird in einem Vakuuminduktionsschmelzofen unter Verwendung eines Zirkoniumdioxid-Tiegels eine Platin-Legierung mit 0,074 Gewichts-% Zirkonium erschmolzen. Die Platin-Legierung wird unter Argon (300 mbar) zu Barren vergossen, aus denen durch Kaltwalzen Bleche mit einer Dicke von 2 Millimeter hergestellt werden. Die Bleche werden dann 300 Stunden lang einer Wärmebehandlung bei 1000 °C an Luft ausgesetzt. Das Gefüge der wärmebehandelten Platin-Zirkonium-Legierung ist grobkörnig.

### Beispiel 15

### Bestimmung des Sauerstoff-Gehaltes

Proben der in den Beispielen 1 - 14 beschriebenen Platin-Werkstoffe und - zum Vergleich - von Platin mit einer Reinheit von 99,95 % und von Platin/Rhodium 10 werden in Granulate mit Einzelgewichten von 25 - 50 mg zerteilt, in einem Ultraschall-Bad zunächst mit Aceton, dann mit Tetrachlorkohlenstoff gereinigt und anschließend mit etwa 60 °C warmer Luft getrocknet. Dann werden jeweils 300 - 500 mg der Proben bei etwa 2400 °C in einen in einem Ofen befindlichen Graphit-Tiegel, der vorher durch Erhitzen auf etwa 2500 °C entgast worden war, gegeben. Der in den bei 2400 °C schmelzflüssigen Proben vorhandene Sauerstoff reagiert mit dem Graphit-Tiegel unter Bildung von Kohlenmonoxid, das mit Hilfe von Helium als Trägergas aus dem Ofen entfernt und über einen Oxidationskatalysator geleitet wird. Die Konzentration des gebildeten Kohlendioxids wird durch quantitative IR-spektroskopische Analyse gemessen und daraus der Gehalt an Sauerstoff in den Proben bestimmt. In der Tabelle I werden der so bestimmte Sauerstoff-Gehalt als Sauerstoff_{gemessen} [Gewichts-%] und außerdem die zur Oxidation von 75 und 100 Gewichts-% Unedelmetall theoretisch erforderlichen Mengen an Sauerstoff als 75 %- und 100 %-Wert von Sauerstoff_{errechnet} [Gewichts-%] angegeben.

Wie die Tabelle zeigt, übersteigt der Sauerstoff-Gehalt einiger Proben den 100 %-Wert. Ein Grund dafür könnte sein, daß in der Platin-Unedelmetall-Legierung als Verunreinigungen sehr geringe Mengen an oxidbildenden Elementen, wie Aluminium und Silicium, enthalten sind. Eine andere Vermutung ist, daß sich infolge der Wärmebehandlung neben den einfachen Unedelmetalloxiden zusätzlich mehr Sauerstoff bindende (verbrauchende?) Platin-Unedelmetall-Mischoxide, zum Beispiel ZrO₂ · PtO, bilden.

### Beispiel 16

### Bestimmung der Zeitstandfestigkeit

Die Versuche zur Bestimmung der Zeitstandfestigkeit erfolgen in der in DD 245 576 A3 beschriebenen Anordnung. Mit Hilfe der Anordnung werden Proben (Querschnitt 0,8 x 3 mm², Länge 120 mm) aus in den Beispielen beschriebenen Ausführungsformen des erfindungsgemäßen Platin-Werkstoffs, zwei handelsüblichen Werkstoffen (Pt-DPH von W. C. Heraeus, Deutschland, und Pt-ZGS von Johnson, Matthey Ltd., Großbritannien), Platin, Platin/Rhodium 10 und Platin/Gold 5 an Luft auf definierte Temperaturen im Bereich von 1000 - 1700 °C erwärmt. Während der Erwärmung auf 1000 - 1700 °C werden die Proben definierten Zugbelastungen bis zum Bruch der Proben ausgesetzt. Dann werden Zeitstand-Schaubilder angefertigt und daraus durch Interpolation die Zugbelastung ermittelt, die bei einer Temperatur von 1600 °C bzw. 1500 °C (Pt) nach einer Zeit von 10 Stunden zum jeweiligen Bruch der Probe führt. Die so ermittelten Zugbelastungs-Werte werden als Zeitstandfestigkeit Rₘ [MPa] in der Tabelle II angegeben.

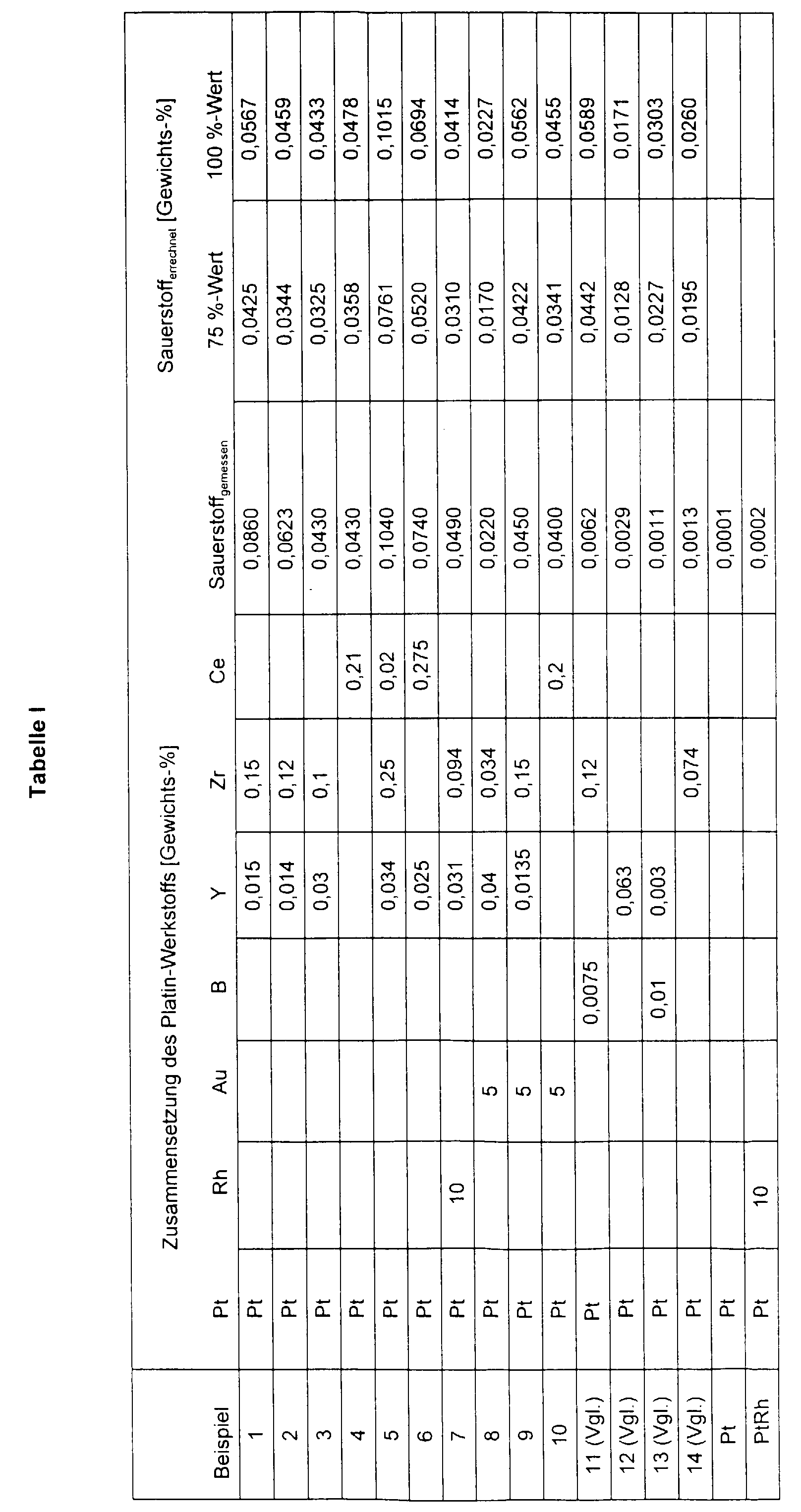

**Tabelle II**

| Beispiel | Zeitstandfestigkeit Rₘ[MPa] bei 1600 °C/10 h |
|---|---|
| 1 | 7 |
| 2 | 5,7 |
| 3 | 5 |
| 4 | 2,2 |
| 7 | 9 |
| 8 | 5 |
| Pt | 1* |
| Pt-DPH | 5 |
| Pt-ZGS | 5 |
| PtRh10 | 3 |
| PtAu5 | 2,5 |

| | |
|---|---|
| ∗ 1500 °C/10 h | |

## Patentansprüche

1. Durch feinverteilte, kleine Teilchen aus Unedelmetalloxid dispersionsverfestigter Platin-Werkstoff, worin das Unedelmetall aus Cer oder ein Gemisch aus mindestens zwei der Elemente Yttrium, Zirkonium und Cer besteht, der Unedelmetall-Gehalt 0,005 - 1 Gewichts-% beträgt, mindestens 75 Gewichts-% des Unedelmetalls als Oxid vorliegen und die Bildung des Unedelmetalloxids auf der Wärmebehandlung einer in kompakter Form vorliegenden Platin-Unedelmetall-Legierung in oxidierendem Medium beruht.

2. Platin-Werkstoff nach Anspruch 1, dadurch gekennzeichnet, daß mindestens 90 Gewichts-% des Unedelmetalls als Oxid vorliegen.

3. Platin-Werkstoff nach Anspruch 1 oder 2, dadurch gekennzeichnet, daß das Unedelmetall aus Cer besteht und der Cer-Gehalt 0,005 - 0,3 Gewichts-% beträgt.

4. Platin-Werkstoff nach Anspruch 3, dadurch gekennzeichnet, daß der Cer-Gehalt 0,01 - 0,2 Gewichts-% beträgt.

5. Platin-Werkstoff nach Anspruch 1 oder 2, dadurch gekennzeichnet, daß das Unedelmetall aus Yttrium und Zirkonium besteht und der Gehalt an Yttrium und Zirkonium 0,005 - 1 Gewichts-% beträgt.

6. Platin-Werkstoff nach Anspruch 5, dadurch gekennzeichnet, daß der Gehalt an Yttrium und Zirkonium 0,05 - 0,5 Gewichts-% beträgt.

7. Platin-Werkstoff nach Anspruch 1 oder 2, dadurch gekennzeichnet, daß das Unedelmetall aus Yttrium und Cer besteht und der Gehalt an Yttrium und Cer 0,005 - 0,5 Gewichts-% beträgt.

8. Platin-Werkstoff nach Anspruch 7, dadurch gekennzeichnet, daß der Gehalt an Yttrium und Cer 0,01 - 0,3 Gewichts-% beträgt.

9. Platin-Werkstoff nach Anspruch 1 oder 2, dadurch gekennzeichnet, daß das Unedelmetall aus Zirkonium und Cer besteht und der Gehalt an Zirkonium und Cer 0,005 - 0,5 Gewichts-% beträgt.

10. Platin-Werkstoff nach Anspruch 9, dadurch gekennzeichnet, daß der Gehalt an Zirkonium und Cer 0,01 - 0.3 Gewichts-% beträgt.

11. Platin-Werkstoff nach Anspruch 1 oder 2, dadurch gekennzeichnet, daß das Unedelmetall aus Yttrium, Zirkonium und Cer besteht und der Gehalt an Yttrium, Zirkonium und Cer 0,005 - 0,5 Gewichts-% beträgt.

12. Platin-Werkstoff nach Anspruch 11, dadurch gekennzeichnet, daß der Gehalt an Yttrium, Zirkonium und Cer 0,01 - 0,3 Gewichts-% beträgt.

13. Platin-Werkstoff nach einem der Ansprüche 1 bis 12, dadurch gekennzeichnet, daß er aus dispersionsverfestigtem Platin, dispersionsverfestigter Platin-Rhodium-Legierung, dispersionsverfestigter Platin-lridium-Legierung oder dispersionsverfestigter Platin-Gold-Legierung besteht.

14. Platin-Werkstoff nach Anspruch 13, dadurch gekennzeichnet, daß der Rhodium-Gehalt der Platin-Rhodium-Legierung 0,5 - 25 Gewichts-% beträgt.

15. Platin-Werkstoff nach Anspruch 13, dadurch gekennzeichnet, daß der Iridium-Gehalt der Platin-lridium-Legierung 0,3 - 50 Gewichts-% beträgt.

16. Platin-Werkstoff nach Anspruch 13, dadurch gekennzeichnet, daß der Gold-Gehalt der Platin-Gold-Legierung 0,5 - 8 Gewichts-% beträgt.

17. Verfahren zur Herstellung von durch feinverteilte, kleine Teilchen aus Unedelmetalloxid dispersionsverfestigtem Platin-Werkstoff unter Erschmelzen und Vergießen einer Platin-Unedelmetall-Legierung und Wärmebehandlung der Platin-Unedelmetall-Legierung in einem oxidierenden Medium, wobei, daß zur Herstellung des Platin-Werkstoffs nach einem der Ansprüche 1 bis 16 eine als Unedelmetall Cer oder ein Gemisch aus mindestens zwei der Elemente Yttrium, Zirkonium und Cer enthaltende Platin-Unedelmetall-Legierung mit einem Unedelmetall-Gehalt von 0,005 - 1 Gewichts-% erschmolzen und vergossen wird und die Wärmebehandlung in dem oxidierenden Medium bei 600 - 1400 °C so lange erfolgt, bis mindestens 75 Gewichts-% des Unedelmetalls oxidiert sind.

18. Verfahren nach Anspruch 17, dadurch gekennzeichnet, daß die Wärmebehandlung so lange erfolgt, bis mindestens 90 Gewichts-% des Unedelmetalls oxidiert sind.

19. Verfahren nach Anspruch 17 oder 18, dadurch gekennzeichnet, daß als oxidierendes Medium eine Atmosphäre aus Luft, Sauerstoff, Wasserdampf oder einem Gemisch aus Wasserdampf und Wasserstoff, Edelgas oder Stickstoff eingesetzt wird.

20. Verfahren nach einem der Ansprüche 17 bis 19, dadurch gekennzeichnet, daß vor und/oder nach der Wärmebehandlung eine Kaltverformung erfolgt.

21. Verfahren nach einem der Ansprüche 17 bis 19, dadurch gekennzeichnet, daß vor und/oder nach der Wärmebehandlung eine Warmverformung erfolgt.

22. Verfahren nach einem der Ansprüche 17 bis 21, dadurch gekennzeichnet, daß vor und/oder nach der Wärmebehandlung ein Schweißverfahren angewandt wird.

23. Verfahren nach einem der Ansprüche 17 bis 22, dadurch gekennzeichnet, daß eine als Unedelmetall Cer in einer Menge von 0,005 - 0,5 Gewichts-% enthaltende Platin-Unedelmetall-Legierung erschmolzen und vergossen wird.

24. Verfahren nach Anspruch 23, dadurch gekennzeichnet, daß eine als Unedelmetall Cer in einer Menge von 0,01 - 0,3 Gewichts-% enthaltende Platin-Unedelmetall-Legierung erschmolzen und vergossen wird.

25. Verfahren nach einem der Ansprüche 17 bis 22, dadurch gekennzeichnet, daß eine als Unedelmetall Yttrium und Zirkonium in einer Menge von 0,005 - 1 Gewichts-% enthaltende Platin-Unedelmetall-Legierung erschmolzen und vergossen wird.

26. Verfahren nach Anspruch 25, dadurch gekennzeichnet, daß eine als Unedelmetall Yttrium und Zirkonium in einer Menge von 0,05 - 0,5 Gewichts-% enthaltende Platin-Unedlmetall-Legierung erschmolzen und vergossen wird.

27. Verfahren nach einem der Ansprüche 17 bis 22, dadurch gekennzeichnet, daß eine als Unedelmetall Yttrium und Cer in einer Menge von 0,005 - 0,3 Gewichts-% enthaltende Platin-Unedelmetall-Legierung erschmolzen und vergossen wird.

28. Verfahren nach Anspruch 27, dadurch gekennzeichnet, daß eine als Unedelmetall Yttrium und Cer in einer Menge von 0,01 - 0,2 Gewichts-% enthaltende Platin-Unedelmetall-Legierung erschmolzen und vergossen wird.

29. Verfahren nach einem der Ansprüche 17 bis 22, dadurch gekennzeichnet, daß eine als Unedelmetall Zirkonium und Cer in einer Menge von 0,005 - 0,5 Gewichts-% enthaltende Platin-Unedelmetall-Legierung erschmolzen und vergossen wird.

30. Verfahren nach Anspruch 29, dadurch gekennzeichnet, daß eine als Unedelmetall Zirkonium und Cer in einer Menge von 0,01 - 0,3 Gewichts-% enthaltende Platin-Unedelmetall-Legierung erschmolzen und vergossen wird.

31. Verfahren nach einem der Ansprüche 17 bis 22, dadurch gekennzeichnet, daß eine als Unedelmetall Yttrium, Zirkonium und Cer in einer Menge von 0,005 - 0,5 Gewichts-% enthaltende Platin-Unedelmetall-Legierung erschmolzen und vergossen wird.

32. Verfahren nach Anspruch 31, dadurch gekennzeichnet, daß eine als Unedelmetall Yttrium, Zirkonium und Cer in einer Menge von 0,01 - 0,3 Gewichts-% enthaltende Platin-Unedelmetall-Legierung erschmolzen und vergossen wird.

33. Verfahren nach einem der Ansprüche 17 bis 32, dadurch gekennzeichnet, daß eine Rhodium enthaltende Platin-Unedelmetall-Legierung mit einem Rhodium-Gehalt von 0,5 - 25 Gewichts-% erschmolzen und vergossen wird.

34. Verfahren nach einem der Ansprüche 17 bis 32, dadurch gekennzeichnet, daß eine Iridium enthaltende Platin-Unedelmetall-Legierung mit einem Iridium-Gehalt von 0,3 - 50 Gewichts-% erschmolzen und vergossen wird.

35. Verfahren nach einem der Ansprüche 17 bis 32, dadurch gekennzeichnet, daß eine Gold enthaltende Platin-Unedelmetall-Legierung mit einem Gold-Gehalt von 0,5 - 8 Gewichts-% erschmolzen und vergossen wird.

36. Verwendung des dispersionsverfestigten Platin-Werkstoffs nach einem der Ansprüche 1 bis 16 für in der Glasindustrie einzusetzende Geräte.

37. Verwendung des dispersionsverfestigten Platin-Werkstoffs nach einem der Ansprüche 1 bis 16 für im Laboratorium einzusetzende Geräte.

38. Verwendung des dispersionsverfestigten Platin-Werkstoffs nach einem der Ansprüche 1 bis 16 zur Herstellung von Beschichtungen.

39. Verwendung des dispersionsverfestigten Platin-Werkstoffs nach einem der Ansprüche 1 bis 16 als Schweißzusatzwerkstoff.

## Claims

1. Platinum material dispersion-hardened by finely divided, small particles of base metal oxide, wherein the base metal consists of cerium or a mixture of at least two of the elements yttrium, zirconium and cerium, the base metal content is 0.005 - 1% by weight, at least 75% by weight of the base metal are present as oxide and the formation of the base metal oxide is based on the heat treatment of a compact platinum-base metal alloy in an oxidizing medium.

2. Platinum material according to Claim 1, characterized in that at least 90% by weight of the base metal is present as oxide.

3. Platinum material according to Claim 1 or 2, characterized in that the base metal consists of cerium and the cerium content is 0.005 - 0.3% by weight.

4. Platinum material according to Claim 3, characterized in that the cerium content is 0.01 - 0.2% by weight.

5. Platinum material according to Claim 1 or 2, characterized in that the base metal consists of yttrium and zirconium and the content of yttrium and zirconium is 0.005 - 1% by weight.

6. Platinum material according to Claim 5, characterized in that the content of yttrium and zirconium is 0.05 - 0.5% by weight.

7. Platinum material according to Claim 1 or 2, characterized in that the base metal consists of yttrium and cerium and the content of yttrium and cerium is 0.005 - 0.5% by weight.

8. Platinum material according to Claim 7, characterized in that the content of yttrium and cerium is 0.01 - 0.3% by weight.

9. Platinum material according to Claim 1 or 2, characterized in that the base metal consists of zirconium and cerium and the content of zirconium and cerium is 0.005 - 0.5% by weight.

10. Platinum material according to Claim 9, characterized in that the content of zirconium and cerium is 0.01 - 0.3% by weight.

11. Platinum material according to Claim 1 or 2, characterized in that the base metal consists of yttrium, zirconium and cerium and the content of yttrium, zirconium and cerium is 0.005 - 0.5% by weight.

12. Platinum material according to Claim 11, characterized in that the content of yttrium, zirconium and cerium is 0.01 - 0.3% by weight.

13. Platinum material according to any of Claims 1 to 12, characterized in that it consists of dispersion-hardened platinum, dispersion-hardened platinum-rhodium alloy, dispersion-hardened platinum-iridium alloy or dispersion-hardened platinum-gold alloy.

14. Platinum material according to Claim 13, characterized in that the rhodium content of the platinum-rhodium alloy is 0.5 - 25% by weight.

15. Platinum material according to Claim 13, characterized in that the iridium content of the platinum-iridium alloy is 0.3 - 50% by weight.

16. Platinum material according to Claim 13, characterized in that the gold content of the platinum-gold alloy is 0.5 - 8% by weight.

17. Process for the preparation of platinum material dispersion-hardened by finely divided, small particles of base metal oxide, with smelting and casting of a platinum-base metal alloy and heat treatment of the platinum-base metal alloy in an oxidizing medium, wherein, for the preparation of the platinum material according to any of Claims 1 to 16, a platinum-base metal alloy containing, as base metal, cerium or a mixture of at least two of the elements yttrium, zirconium and cerium and having a base metal content of 0.005 - 1% by weight is smelted and cast and the heat treatment is carried out in the oxidizing medium at 600 - 1400°C until at least 75% by weight of the base metal have been oxidized.

18. Process according to Claim 17, characterized in that the heat treatment is carried out until at least 90% by weight of the base metal have been oxidized.

19. Process according to Claim 17 or 18, characterized in that the oxidizing medium used is an atmosphere comprising air, oxygen, steam or a mixture of steam and hydrogen, noble gas or nitrogen.

20. Process according to any of Claims 17 to 19, characterized in that cold working is carried out before and/or after the heat treatment.

21. Process according to any of Claims 17 to 19, characterized in that hot working is carried out before and/or after the heat treatment.

22. Process according to any of Claims 17 to 21, characterized in that a welding process is used before and/or after the heat treatment.

23. Process according to any of Claims 17 to 22, characterized in that a platinum-base metal alloy containing, as base metal, cerium in an amount of 0.005 - 0.5% by weight is smelted and cast.

24. Process according to Claim 23, characterized in that a platinum-base metal alloy containing, as base metal, cerium in an amount of 0.01 - 0.3% by weight is smelted and cast.

25. Process according to any of Claims 17 to 22, characterized in that a platinum-base metal alloy containing, as base metal, yttrium and zirconium in an amount of 0.005 - 1% by weight is smelted and cast.

26. Process according to Claim 25, characterized in that a platinum-base metal alloy containing, as base metal, yttrium and zirconium in an amount of 0.05 - 0.5% by weight is smelted and cast.

27. Process according to any of Claims 17 to 22, characterized in that a platinum-base metal alloy containing, as base metal, yttrium and cerium in an amount of 0.005 - 0.3% by weight is smelted and cast.

28. Process according to Claim 27, characterized in that a platinum-base metal alloy containing, as base metal, yttrium and cerium in an amount of 0.01 - 0.2% by weight is smelted and cast.

29. Process according to any of Claims 17 to 22, characterized in that a platinum-base metal alloy containing, as base metal, zirconium and cerium in an amount of 0.005 - 0.5% by weight is smelted and cast.

30. Process according to Claim 29, characterized in that a platinum-base metal alloy containing, as base metal, zirconium and cerium in an amount of 0.01 - 0.3% by weight is smelted and cast.

31. Process according to any of Claims 17 to 22, characterized in that a platinum-base metal alloy containing, as base metal, yttrium, zirconium and cerium in an amount of 0.005 - 0.5% by weight is smelted and cast.

32. Process according to Claim 31, characterized in that a platinum-base metal alloy containing, as base metal, yttrium, zirconium and cerium in an amount of 0.01 - 0.3% by weight is smelted and cast.

33. Process according to any of Claims 17 to 32, characterized in that a rhodium-containing platinum-base metal alloy having a rhodium content of 0.5 - 25% by weight is smelted and cast.

34. Process according to any of Claims 17 to 32, characterized in that an iridium-containing platinum-base metal alloy having an iridium content of 0.3 - 50% by weight is smelted and cast.

35. Process according to any of Claims 17 to 32, characterized in that a gold-containing platinum-base metal alloy having a gold content of 0.5 - 8% by weight is smelted and cast.

36. Use of the dispersion-hardened platinum material according to any of Claims 1 to 16 for devices to be used in the glass industry.

37. Use of the dispersion-hardened platinum material according to any of Claims 1 to 16 for devices to be used in the laboratory.

38. Use of the dispersion-hardened platinum material according to any of Claims 1 to 16 for the production of coatings.

39. Use of the dispersion-hardened platinum material according to any of Claims 1 to 16 as welding filler material.

## Revendications

1. Matériau à base de platine renforcé par dispersion par de petites particules finement divisées d'oxyde de métal commun où le métal commun consiste en cérium ou en un mélange d'au moins deux des éléments yttrium, zirconium et cérium, la teneur en métal commun est de 0,005-1% en masse, au moins 75% en masse du métal commun sont sous forme d'oxyde et la formation de l'oxyde de métal commun est basée sur le traitement thermique dans un milieu oxydant d'un alliage platine-métal commun présent sous forme compacte.

2. Matériau à base de platine selon la revendication 1 caractérisé en ce qu'au moins 90% en masse du métal commun sont sous forme d'oxyde.

3. Matériau à base de platine selon la revendication 1 ou 2 caractérisé en ce que le métal commun consiste en cérium et la teneur en cérium est de 0,005-0,3% en masse.

4. Matériau à base de platine selon la revendication 3 caractérisé en ce que la teneur en cérium est de 0,01-0,2% en masse.

5. Matériau à base de platine selon la revendication 1 ou 2 caractérisé en ce que le métal commun consiste en yttrium et zirconium et la teneur en yttrium et zirconium est de 0,005-1% en masse.

6. Matériau à base de platine selon la revendication 5 caractérisé en ce que la teneur en yttrium et zirconium est de 0,05-0 ,5% en masse.

7. Matériau à base de platine selon la revendication 1 ou 2 caractérisé en ce que le métal commun consiste en yttrium et cérium et la teneur en yttrium et cérium est de 0,005-0,5% en masse.

8. Matériau à base de platine selon la revendication 7 caractérisé en ce que la teneur en yttrium et cérium est de 0,01-0,3% en masse.

9. Matériau à base de platine selon la revendication 1 ou 2 caractérisé en ce que le métal commun consiste en zirconium et cérium et la teneur en zirconium et cérium est de 0,005-0,5% en masse.

10. Matériau à base de platine selon la revendication 9 caractérisé en ce que la teneur en zirconium et cérium est de 0,01-0,3% en masse.

11. Matériau à base de platine selon la revendication 1 ou 2 caractérisé en ce que le métal commun consiste en yttrium, zirconium et cérium et la teneur en yttrium, zirconium et cérium est de 0,005-0,5% en masse.

12. Matériau à base de platine selon la revendication 11 caractérisé en ce que la teneur en yttrium, zirconium et cérium est de 0,01-0,3% en masse.

13. Matériau à base de platine selon l'une des revendications 1 à 12 caractérisé en ce qu'il consiste en platine renforcé par dispersion, en un alliage platine-rhodium renforcé par dispersion, en un alliage platine-iridium renforcé par dispersion ou en un alliage platine-or renforcé par dispersion.

14. Matériau à base de platine selon la revendication 13 caractérisé en ce que la teneur en rhodium de l'alliage platine-rhodium est de 0,5-25% en masse.

15. Matériau à base de platine selon la revendication 13 caractérisé en ce que la teneur en iridium de l'alliage platine-iridium est de 0,3-50% en masse.

16. Matériau à base de platine selon la revendication 13 caractérisé en ce que la teneur en or de l'alliage platine-or est de 0,5-8% en masse.

17. Procédé de fabrication d'un matériau à base de platine renforcé par dispersion par de petites particules finement divisées d'un oxyde de métal commun sous fusion et coulée d'un alliage platine-métal commun et traitement thermique de l'alliage platine-métal commun dans un milieu oxydant, où, pour la fabrication du matériau à base de platine selon l'une des revendications 1 à 16, un alliage platine-métal commun contenant comme métal commun du cérium ou un mélange d'au moins deux des éléments yttrium, zirconium et cérium ayant une teneur en métal commun de 0,005-1% en masse est fondu et coulé et le traitement thermique se déroule dans un milieu oxydant à 600-1400°C jusqu'à ce qu'au moins 75% en masse du métal commun soient oxydés.

18. Procédé selon la revendication 17 caractérisé en ce que le traitement thermique se déroule jusqu'à ce qu'au moins 90% en masse du métal commun soient oxydés.

19. Procédé selon la revendication 17 ou 18 caractérisé en ce qu'une atmosphère consistant en air, oxygène, vapeur d'eau ou en un mélange de vapeur d'eau et d'hydrogène, d'un gaz noble ou d'azote est utilisée comme milieu oxydant.

20. Procédé selon l'une des revendications 17 à 19 caractérisé en ce qu'une mise en forme à froid a lieu avant et/ou après le traitement thermique.

21. Procédé selon l'une des revendications 17 à 19 caractérisé en ce qu'une mise en forme à chaud a lieu avant et/ou après le traitement thermique.

22. Procédé selon l'une des revendications 17 à 21 caractérisé en ce qu'un procédé de soudage est mis en oeuvre avant et/ou après le traitement thermique.

23. Procédé selon l'une des revendications 17 à 22 caractérisé en ce qu'un alliage platine-métal commun contenant comme métal commun du cérium en une quantité de 0,005-0,5% en masse est fondu et coulé.

24. Procédé selon la revendication 23 caractérisé en ce qu'un alliage platine-métal commun contenant comme métal commun du cérium en une quantité de 0,01-0,3% en masse est fondu et coulé.

25. Procédé selon l'une des revendications 17 à 22 caractérisé en ce qu'un alliage platine-métal commun contenant comme métal commun de l'yttrium et du zirconium en une quantité de 0,005-1% en masse est fondu et coulé.

26. Procédé selon la revendication 25 caractérisé en ce qu'un alliage platine-métal commun contenant comme métal commun de l'yttrium et du zirconium en une quantité de 0,05-0,5% en masse est fondu et coulé.

27. Procédé selon l'une des revendications 17 à 22 caractérisé en ce qu'un alliage platine-métal commun contenant comme métal commun de l'yttrium et du cérium en une quantité de 0,005-0,3% en masse est fondu et coulé.

28. Procédé selon la revendication 27 caractérisé en ce qu'un alliage platine-métal commun contenant comme métal commun de l'yttrium et du cérium en une quantité de 0,01-0,2% en masse est fondu et coulé.

29. Procédé selon l'une des revendications 17 à 22 caractérisé en ce qu'un alliage platine-métal commun contenant comme métal commun du zirconium et du cérium en une quantité de 0,005-0,5% en masse est fondu et coulé.

30. Procédé selon la revendication 29 caractérisé en ce qu'un contenant comme métal commun du zirconium et du cérium en une quantité de 0,01-0,3% en masse est fondu et coulé.

31. Procédé selon l'une des revendications 17 à 22 caractérisé en ce qu'un alliage platine-métal commun contenant comme métal commun de l'yttrium, du zirconium et du cérium en une quantité de 0,005-0,5% en masse est fondu et coulé.

32. Procédé selon la revendication 31 caractérisé en ce qu'un alliage platine-métal commun contenant comme métal commun de l'yttrium, du zirconium et du cérium en une quantité de 0,01-0,3% en masse est fondu et coulé.

33. Procédé selon l'une des revendications 17 à 32 caractérisé en ce qu'un alliage platine-métal commun contenant du rhodium ayant une teneur en rhodium de 0,5-25% en masse est fondu et coulé.

34. Procédé selon l'une des revendications 17 à 32 caractérisé en ce qu'un alliage platine-métal commun contenant de l'iridium ayant une teneur en iridium de 0,3-50% en masse est fondu et coulé.

35. Procédé selon l'une des revendications 17 à 32 caractérisé en ce qu'un alliage platine-métal commun contenant de l'or ayant une teneur en or de 0,5-8% en masse est fondu et coulé.

36. Utilisation du matériau à base de platine renforcé par dispersion selon l'une des revendications 1 à 16 pour des appareils à utiliser dans l'industrie du verre.

37. Utilisation du matériau à base de platine renforcé par dispersion selon l'une des revendications 1 à 16 pour des appareils à utiliser au laboratoire.

38. Utilisation du matériau à base de platine renforcé par dispersion selon l'une des revendications 1 à 16 pour la fabrication de revêtements.

39. Utilisation du matériau à base de platine renforcé par dispersion selon l'une des revendications 1 à 16 comme métal d'apport.
